# EUROPÄISCHE PATENTSCHRIFT

(11) **EP 4 045 217 B1**
(45) Veröffentlichungstag und Bekanntmachung des Hinweises auf die Patenterteilung: **11.01.2023**
(21) Anmeldenummer: 20789930.3
(22) Anmeldetag: 09.10.2020
(51) Int. Cl.: B23F 1/02, B23F 5/02, B23F 23/12, G05B 19/18

(54) **VERFAHREN ZUM SCHLEIFEN DER VERZAHNUNG ODER DES PROFILS EINES WERKSTÜCKS**
METHOD FOR GRINDING THE TOOTHING OR THE PROFILE OF A WORKPIECE
PROCÉDÉ DE MEULAGE DE LA DENTURE OU DU PROFIL D'UNE PIÈCE OUVRÉE

(30) Priorität: 17.10.2019 DE 102019128100
(43) Veröffentlichungstag der Anmeldung: 24.08.2022
(73) Patentinhaber: Kapp Niles GmbH & Co. KG, 96450 Coburg (DE)
(72) Erfinder: DR. GRINKO, Sergiy, 96450 Coburg (DE)
(74) Vertreter: Gosdin, Carstensen & Partner Patentanwälte Partnerschaftgesellschaft mbB
(86) Internationale Anmeldenummer: PCT/EP2020/078354
(87) Internationale Veröffentlichungsnummer: WO 2021/074016

(56) Entgegenhaltungen:
- EP-A1- 2 583 779
- EP-A1- 3 407 011
- EP-A1- 3 456 453
- EP-A2- 2 347 856
- WO-A1-2006/053447
- DE-A1- 3 631 098
- DE-A1-102010 055 820
- US-B1- 6 577 917

## Beschreibung

Die Erfindung betrifft ein Verfahren zum Schleifen der Verzahnung oder des Profils eines Werkstücks, insbesondere eines Zahnrads, wobei das Werkstück eine Drehachse aufweist und wobei von der Oberfläche der Zahnflanken der Verzahnung oder des Profils ein Aufmaß abgeschliffen wird, wobei das Verfahren die Schritte umfasst:
a) Vermessen der Lage der Oberfläche der Zahnflanken der Verzahnung oder des Profils, wobei das Vermessen an mindestens zwei Positionen des Werkstücks erfolgt, die in Richtung der Drehachse versetzt angeordnet sind;
b) Ermittlung des tatsächlich vorhandenen Aufmaßes des noch nicht geschliffenen Werkstücks auf der Basis der in Schritt a) ermittelten Messwerte;
c) Festlegen mindestens eines Schleifparameters, so dass beim Schleifen das Zerspanvolumen pro Zeit einen vorgegebenen Wert annimmt oder nicht übersteigt;
d) Schleifen des Werkstücks mit den gemäß Schritt c) festgelegten Schleifparametern.

Ein gattungsgemäßes Verfahren ist aus der EP 2 583 779 A1 bekannt. Hier erfolgt eine Vermessung der Oberfläche einer Zahnflanke und eine anschließende Festlegung der Schleifparameter, so dass Schleifbrand vermieden werden kann.

In der EP 2 347 856 A2 wird das abzuschleifende Aufmaß über der Zahnhöhe an mehreren Punkten vermessen und aufgrund des hier ermittelten Maximalwerts ein zulässiger Wert für die Schleifparameter ermittelt, mit denen dann gearbeitet wird. Eine ähnliche Lösung zeigt die DE 36 31 098 A1**.**

Weitere ähnliche Lösungen werden in der WO 2006/053447 A1**,** in der US 6 577 917 B1**,** in der EP 3 407 011 A1 und in der EP 3 456 453 A1 beschrieben.

Bei einem Schleifverfahren der gattungsgemäßen Art, insbesondere beim Verzahnungsschleifen, werden die Werkstücke bei der serienmäßigen Produktion in jedem Hub mit einer vorgegebenen konstanten Vorschubgeschwindigkeit bearbeitet. In verschiedenen Hüben können sich die Vorschubgeschwindigkeiten aber unterscheiden (insbesondere beim Schuppen und beim Schlichten).

Die für den Schleifprozess vorgegebenen Maschinenparameter basieren dabei auf vorab definierten bzw. vorgegebenen Werten, wobei insbesondere das Aufmaß (pro Hub) an den Zahnflanken von besonderer Bedeutung ist und darüber entscheidet, wie die Maschinenparameter und insbesondere die Vorschubgeschwindigkeit gewählt werden. Die vorgegebene Vorschubgeschwindigkeit sowie die (radiale) Zustellung zwischen Werkstück und Werkzeug ergeben bei gegebenem Aufmaß das Zerspanvolumen pro Zeit (d. h. das Zeitspanvolumen), welches von den Zahnflanken beim Schleifprozess abgetragen wird.

In der Praxis kann sich das tatsächliche Aufmaß auf dem Werkstück, das abzuschleifen ist, allerdings vom vorgegebenen Aufmaß unterscheiden, und zwar sowohl konstant über die gesamte Breite der Verzahnung als auch nur lokal über axiale Abschnitte der Zahnflanke.

Um dieser Problematik zu begegnen, ist es bereits bekannt, den Schleifprozess adaptiv zu gestalten und die Leistung des Schleifmotors bzw. die Stromaufnahme des Schleifmotors als zu regelnde Größe heranzuziehen. Steigt die Leistungsaufnahme bzw. der Strom an, wird die Vorschubgeschwindigkeit entsprechend reduziert.

Demgemäß wird hiernach die Schleifmaschine mit einem variablen Zeitspanvolumen über den Schleifhub betrieben. Nachteilig sind hier allerdings variable Zustände unter dem Gesichtspunkt des Werkzeugverschleißes und der thermischen Zahnflankenschädigungen über der Zahnradbreite.

Nachteilig ist bei dieser vorbekannten Lösung weiterhin, dass der auf diese Weise betriebene Prozess zu ungenau ist uns somit nicht immer zu einem befriedigenden Schleifergebnis führt.

Der Erfindung liegt die **Aufgabe** zugrunde, ein gattungsgemäßes Verfahren so weiterzubilden, dass der Schleifvorgang optimiert wird. Dabei sollen insbesondere die maßgeblichen Schleifparameter so angepasst werden, dass sich ein gutes Schleifergebnis sowie ein wirtschaftlicher Prozess ergeben.

Die **Lösung** dieser Aufgabe durch die Erfindung sieht vor, dass der festgelegte Schleifparameter gemäß dem oben genannten Schritt c) die Vorschubgeschwindigkeit ist, mit der das Schleifwerkzeug beim Schleifen der Verzahnung oder des Profils bewegt wird, wobei das Festlegen der Vorschubgeschwindigkeit in Form eines Verlaufs erfolgt, der sich in Richtung der Drehachse ändert und das jeweils lokal vorhandene Aufmaß berücksichtigt.

Somit kann das Zeitspanungsvolumen (Zerspanvolumen pro Zeit) in Abhängigkeit des tatsächlich vorhandenen Aufmaßes (ohne Änderung der Zustellung und somit bei gleichbleibender Anzahl der Schleif-Hübe und hierdurch wiederum bei günstigen Bearbeitungszeiten pro Werkstück) konstant gehalten werden. In der Maschinensteuerung wird hierfür auch mitunter als Eingabe der Vorschub pro Umdrehung verwendet, d. h. die Vorschubgeschwindigkeit in Abhängigkeit der Gangzahl und Drehzahl des Werkstücks.

Vorgesehen ist demgemäß, dass das Festlegen des mindestens einen Schleifparameters in Form eines Verlaufs erfolgt, der sich in Richtung der Drehachse ändert und das jeweils lokal vorhandene Aufmaß berücksichtigt.

Die Vermessung der Lage der Oberfläche der Zahnflanken der Verzahnung oder des Profils gemäß obigem Schritt a) kann mit mindestens zwei Sensoren erfolgen, die in Richtung der Drehachse versetzt, aber an derselben Umfangsposition des Werkstücks angeordnet sind.

Alternativ kann vorgesehen werden, dass die Vermessung der Lage der Oberfläche der Zahnflanken der Verzahnung oder des Profils gemäß obigem Schritt a) mit mindestens zwei Sensoren erfolgt, die in Richtung der Drehachse versetzt und an unterschiedlichen Umfangspositionen des Zahnrades angeordnet sind. Dies kann sich aus Gründen des zur Verfügung stehenden Bauraums als sehr vorteilhaft erweisen.

Eine weitere alternative Möglichkeit sieht vor, dass die Vermessung der Lage der Oberfläche der Zahnflanken gemäß obigem Schritt a) mit einem einzigen Sensor erfolgt, der in Richtung der Drehachse beweglich angeordnet ist.

Als Sensor kann ein optisch wirkender Sensor verwendet werden, wobei hierbei insbesondere ein Laser eingesetzt werden kann. Gleichermaßen tauglich sind induktiv oder kapazitiv wirkende Sensoren. Auch Sensoren, die Wirbelströme nutzen, sind generell geeignet.

Als Schleifwerkzeug wird vorzugsweise eine Schleifschnecke verwendet. Gleichermaßen ist aber auch der Einsatz einer Schleifscheibe möglich.

Bei dem zu bearbeitenden Werkstück handelt es sich bevorzugt um ein Zahnrad mit einer Außen verzahnung.

Somit wird eine adaptive Regelung insbesondere des Vorschubs beim Schleifen realisiert, so dass der Schleifprozess stets im optimalen Bereich gehalten werden kann. Schwankungen des Aufmaßes können effektiv ausgeglichen werden.

Die Erfindung stellt somit auf das Konzept ab, dass bereits vor dem Schleifprozess eine Vermessung des Aufmaßes an mindestens zwei, vorzugsweise an einer noch größeren Anzahl an axialen Positionen der Verzahnung bzw. des Profils erfolgt und dann aufgrund der Messung die Vorschubgeschwindigkeit für das sich anschließende Schleifen festgelegt wird.

Vorgesehen ist demgemäß, dass ein Verlauf für die Vorschubgeschwindigkeit über die axiale Erstreckung der Verzahnung festgelegt und dann dem Schleifprozess zu Grunde gelegt wird.

Demgemäß wird das Werkstück über die Zahnradbreite bzw. Profilbreite vor der Bearbeitung vermessen und darauf basierend eine variable Anpassung der Vorschubgeschwindigkeit vorgenommen.

In der Zeichnung sind Ausführungsbeispiele der Erfindung dargestellt. Es zeigen:
- Fig. 1: schematisch die Darstellung des Vermessens des Aufmaßes eines Zahnrads gemäß einer ersten Ausführungsform der Erfindung,
- Fig. 2: schematisch die Darstellung des Vermessens des Aufmaßes eines Zahnrads gemäß einer zweiten Ausführungsform der Erfindung,
- Fig. 3: schematisch die Darstellung des Vermessens des Aufmaßes eines Zahnrads gemäß einer dritten Ausführungsform der Erfindung,
- Fig. 4: schematisch ein Zahnrad, für dessen Verzahnung über der axialen Erstreckung (d. h. in Richtung der Drehachse a) das Aufmaß A ermittelt wurde, woraus der Verlauf einer - nicht erfindungsgemäßen - konstanten Vorschubgeschwindigkeit v beim Schleifen abgeleitet wurde, und
- Fig. 5: schematisch ein Zahnrad, für dessen Verzahnung wiederum über der axialen Erstreckung das Aufmaß A ermittelt wurde, woraus der Verlauf einer erfindungsgemäßen variablen Vorschubgeschwindigkeit v beim Schleifen abgeleitet wurde.

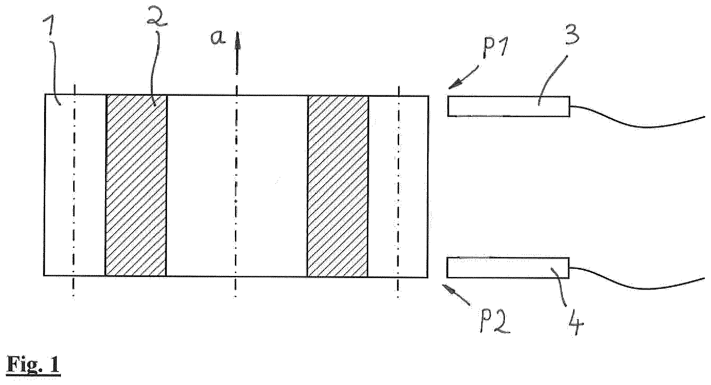

In Fig. 1 ist ein Zahnrad 2 zu sehen, welches eine Drehachse a aufweist sowie eine zu schleifende Verzahnung 1.

Das Zahnrad 2 hat vor seiner Hartfeinbearbeitung auf den Zahnflanken ein Aufmaß, welches durch den Schleifprozess abgeschliffen wird, um das fertige Teil herzustellen. Das noch nicht bearbeitete Zahnrad 2 ist häufig betreffend das Aufmaß unregelmäßig, d. h. das Aufmaß schwankt in gewissen Grenzen.

Dies folgt daraus, dass nach dem Härten die Verzahnungen häufig verzogen sind und somit unsystematische Fehler im Verzahnungsprofil, in der Verzahnungslinie und im Verzahnungsmaß aufweisen. Ferner kann bezüglich der Spannbohrung ein Taumel vorliegen.

Beim Schleifen kann dies zu Unterschieden hinsichtlich des abzuschleifenden Materials über der Zahnradbreite und zu entsprechenden Unterschieden in der Werkzeugbelastung über den Hub führen.

Demgemäß sieht die vorliegende Erfindung vor, entsprechend dem tatsächlichen Aufmaß die Vorschubgeschwindigkeit adaptiv noch vor dem Schleifhub aufgrund des vermessenen Aufmaßes festzulegen.

Für das nominelle bzw. theoretische Aufmaß liegen für das Zahnrad zunächst entsprechend der Konstruktionszeichnung Daten vor, die zu einer entsprechenden Abfolge von Schleifoperationen führen (Anzahl der Schleifhübe, Zustellungen, etc.). Diese nominellen Werte berücksichtigen allerdings nicht das tatsächlich vorliegende Aufmaß auf der Zahnflanke, welches abzuschleifen ist. Somit werden zunächst die Bearbeitungsparameter (insbesondere Vorschubgeschwindigkeit oder Vorschub pro Umdrehung in jedem Hub) mit einem konstanten, nominellen Wert festgelegt.

Werden allerdings durch die erfindungsgemäß vorgesehene Messung Schwankungen im Aufmaß über der axialen Erstreckung des Zahnrads (d. h. in Richtung der Drehachse a) festgestellt, werden diese Erkenntnisse verwendet, um die Vorschubgeschwindigkeit oder den Vorschub pro Umdrehung anzupassen.

Für das Vermessen der Lage der Oberfläche der Zahnflanken, d. h. des tatsächlichen Aufmaßes, des noch nicht geschliffenen Zahnrads sind in den Figuren 1 bis 3 mögliche Lösungen illustriert:
Hiernach wird erfindungsgemäß an mindestens zwei axial versetzten Positionen P1 und P2 eine Messung vorgenommen, wie es Figur 1 zeigt. Die beiden Sensoren 3 und 4 befinden sich hier etwa in den beiden axialen Endbereichen der Verzahnung 1 und vermessen hier das effektiv vorliegende Aufmaß auf den Zahnflanken.

Die Signale der Sensoren 3 und 4 werden von der (nicht dargestellten) Maschinensteuerung aufgenommen, die bei Rotation des Werkstücks 2 unter Berücksichtigung der zugehörigen Signale der Sensoren 3 und 4 ermitteln kann, wie hoch das tatsächlich vorhandene Aufmaß an den beiden Messstellen P1 und P2 ist. Natürlich können auch mehr Messstellen vorgesehen werden, um bezüglich des tatsächlich vorhandenen Aufmaßes genauere Informationen zu gewinnen.

Aus den gemessenen Werten der Lage der Oberfläche der Zahnflanken ist durch den Vergleich mit der Form der Zahnflanke nach dem Schleifprozess in einfacher Weise das Aufmaß als Differenz zwischen Ist-Maß und Soll-Maß zu ermitteln.

Somit liegen nunmehr Informationen über die Verteilung des Aufmaßes über die Verzahnungsbreite vor (was durch Einsatz einer entsprechenden Anzahl von Sensoren hinreichend genau erfolgen kann).

Wesentlich ist also, dass generell der Verlauf des Aufmaßes A über der axialen Erstreckung der Verzahnung 1 ermittelt wird.

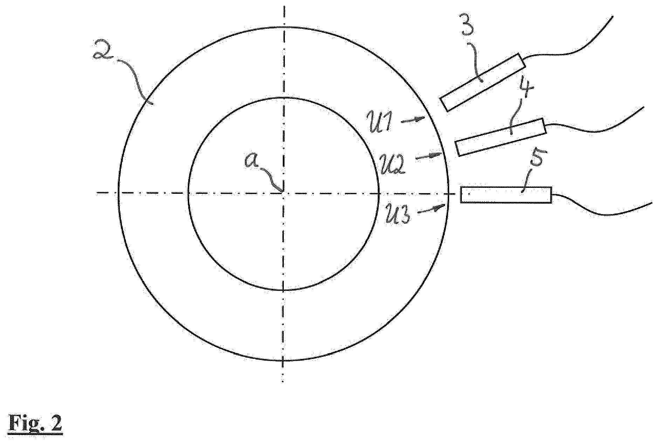

In Figur 2 ist zu sehen, das mit mehreren Sensoren, hier mit den drei Sensoren 3, 4 und 5, in Richtung der Drehachse a versetzt und gleichzeitig auch in Umfangsrichtung versetzt die Messung durchgeführt wird. Die drei Sensoren 3, 4, 5 sind nämlich an unterschiedlichen Umfangspositionen U1, U2 und U3 angeordnet. Hierdurch kann insbesondere bei engem Bauraum erreicht werden, dass dennoch alle benötigten Sensoren platzsparend untergebracht werden können. Dies gilt insbesondere im Falle einer geringen Zahnbreite.

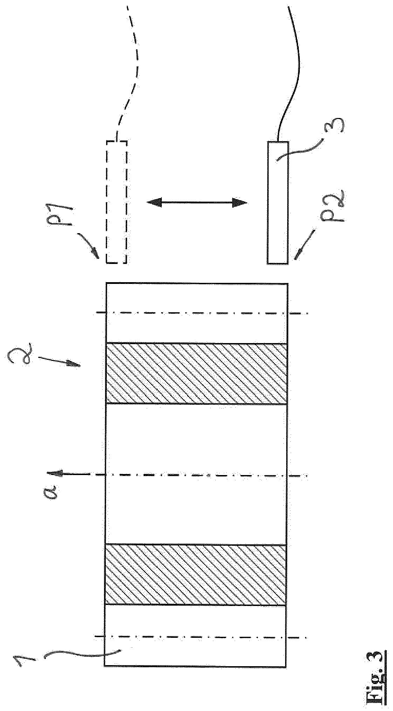

In Figur 3 ist eine Variante zu sehen, bei der in mehreren Ebenen mit nur einem einzigen Sensor 3 eine Messung erfolgen kann. Hierzu wird der Sensor 3 in Richtung des Doppelpfeils axial bewegt und gleichzeitig die gemessenen Signale aufgenommen. Somit wird hier dann ein spiralförmiges Signal aufgenommen, welches von der Maschinensteuerung in das effektive Aufmaß an den Zahnflanken umgerechnet werden kann. Natürlich ist es auch möglich, die Messung bei ortsfestem Sensor durchzuführen und diesen dann sukzessive zur Vermessung in mehreren Ebenen jeweils axial zu verschieben.

Die Sensoren 3, 4, 5 können entweder separat oder in einem Gehäuse untergebracht werden.

Für alle Messungen gilt, dass die Maschinensteuerung aus der (aktuellen) Position des Sensors bzw. der Sensoren und der Drehlage der Verzahnung 1 ermitteln kann, wo die Oberfläche der vermessenen Zahnflanke liegt, so dass die benötigte Information über das effektiv vorhandene Aufmaß gewonnen werden kann.

Das heißt, ist die relative Positionierung der Sensoren zueinander bekannt, ist es möglich, die Aufmaßverteilung der Verzahnung durch entsprechende Umrechnung der Signale der Sensoren unter Berücksichtigung der Geometrie des Zahnrads (insbesondere des Schrägungswinkels bei Schrägverzahnung) zu ermitteln.

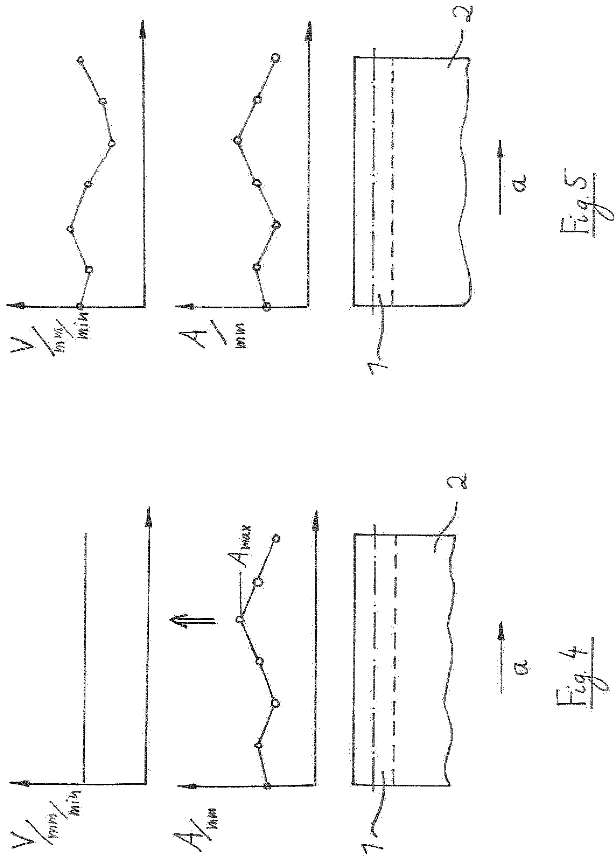

In Figur 4 ist das vorgeschlagene Verfahren generell, allerdings nicht erfindungsgemäß nochmals illustriert:
Die Verzahnung 1 des Zahnrads 2 wird entlang der axialen Richtung, d. h. in Richtung der Drehachse a, von den Sensoren vermessen. In Figur 4 ist oberhalb des dargestellten Zahnrads der so ermittelte Verlauf des Aufmaßes A über die axiale Richtung (Richtung a) dargestellt. Im Ausführungsbeispiel nach Figur 4 wurde aus dem aufgezeichneten Verlauf des Aufmaßes A der maximale Wert für das Aufmaß Aₘₐₓ bestimmt. Ausgehend hiervon wurde der Wert der Vorschubgeschwindigkeit v für das Schleifen bestimmt (dies kann durch eine in der Maschinesteuerung gespeicherte Korrelationstabelle erfolgen, in der für einen gegebenen Wert des Aufmaßes in Millimeter ein korrespondierender (optimaler) Wert für die Vorschubgeschwindigkeit in mm/min hinterlegt ist). Die Vorschubgeschwindigkeit ist hier als konstanter Wert über die gesamte Zahnbreite vorgegeben.

Das Schleifen mit der so ermittelten Vorschubgeschwindigkeit stellt eine hohe Qualität des Zahnrads 2 sicher.

In Figur 5 ist eine erfindungsgemäße Vorgehensweise dargestellt. Wiederum wurde die Verzahnung des Zahnrads 2 vermessen und das Aufmaß A über den axialen Verlauf ermittelt (siehe Diagramm oberhalb des dargestellten Zahnrads in Figur 5). Im Unterschied zur Vorgehensweise nach Figur 4 wurde nunmehr allerdings für jeden ermittelten Wert des Aufmaßes an einer axialen Position der Verzahnung 1 ein zugehöriger Wert für die Vorschubgeschwindigkeit ermittelt (wiederum zum Beispiel über die erwähnte Korrelationstabelle). Hieraus ergibt sich ein variabler Verlauf der Vorschubgeschwindigkeit über der axialen Richtung (Richtung a), wie es sich aus dem oben in Figur 5 wiedergegebenen Diagramm ergibt.

Beim Schleifen wird also nun mit dem ermittelten Verlauf für die Vorschubgeschwindigkeit gearbeitet und so stets gleichbleibende Schleifkonditionen über der Breite der Verzahnung sichergestellt.

Zu der in Figur 5 dargestellten und beschriebenen Vorgehensweise sei noch folgendes angemerkt: Hinsichtlich der Maschinensteuerung ist eine solche Vorgehensweise mitunter relativ aufwendig. Daher kommt es als Variante zu der in Figur 5 dargestellten Verfahrensweise vorteilhaft in Betracht, den ermittelten Verlauf für das Aufmaß oder den daraus resultierenden Verlauf der Vorschubgeschwindigkeit zu glätten bzw. zu approximieren. Hierbei wird dann insbesondere ein "eckiger" Verlauf der Vorschubgeschwindigkeit vermieden und stattdessen mit einem Ersatzverlauf der Vorschubgeschwindigkeit über die axiale Richtung a gearbeitet, der geglättet ist und so ein flüssigeres Arbeiten erlaubt. Insofern kommt als weitere Variante dann auch in Betracht, dass die gemessenen bzw. ermittelten Werte für das Aufmaß bzw. für die Vorschubgeschwindigkeit mittels einer Ausgleichsfunktion angepasst werden.

Durch die an die aktuelle Aufmaßsituation angepassten Bearbeitungsparameter, insbesondere die Vorschubgeschwindigkeit, beim Schleifen können optimale Schleifbedingungen gewährleistet werden, so dass sich eine hohe Qualität der Verzahnung bei bestmöglichen Materialeigenschaften ergibt.

### Bezugszeichenliste:

- 1: Verzahnung
- 2: Werkstück (Zahnrad)
- 3: Sensor
- 4: Sensor
- 5: Sensor

- a: Drehachse des Werkstücks

- P1: erste axiale Position
- P2: erste axiale Position
- U1: erste Umfangsposition
- U2: zweite Umfangsposition
- U3: dritte Umfangsposition

- A: Aufmaß
- Aₘₐₓ: maximales Aufmaß

- v: Schleifparameter (Vorschubgeschwindigkeit v_{f})

## Patentansprüche

1. Verfahren zum Schleifen der Verzahnung (1) oder des Profils eines Werkstücks (2), insbesondere eines Zahnrads, wobei das Werkstück (2) eine Drehachse (a) aufweist und wobei von der Oberfläche der Zahnflanken der Verzahnung (1) oder des Profils ein Aufmaß (A) abgeschliffen wird, wobei das Verfahren die Schritte umfasst:
a) Vermessen der Lage der Oberfläche der Zahnflanken der Verzahnung (1) oder des Profils, wobei das Vermessen an mindestens zwei Positionen (P1, P2) des Werkstücks (2) erfolgt, die in Richtung der Drehachse (a) versetzt angeordnet sind;
b) Ermittlung des tatsächlich vorhandenen Aufmaßes (A) des noch nicht geschliffenen Werkstücks (2) auf der Basis der in Schritt a) ermittelten Messwerte;
c) Festlegen mindestens eines Schleifparameters (v), so dass beim Schleifen das Zerspanvolumen pro Zeit einen vorgegebenen Wert annimmt oder nicht übersteigt;
d) Schleifen des Werkstücks (2) mit den gemäß Schritt c) festgelegten Schleifparametern (v),
**dadurch gekennzeichnet, dass**
der festgelegte Schleifparameter (v) gemäß Schritt c) die Vorschubgeschwindigkeit ist, mit der das Schleifwerkzeug beim Schleifen der Verzahnung (1) oder des Profils bewegt wird, wobei das Festlegen der Vorschubgeschwindigkeit (v) in Form eines Verlaufs erfolgt, der sich in Richtung der Drehachse (a) ändert und das jeweils lokal vorhandene Aufmaß (A) berücksichtigt.

2. Verfahren nach Anspruch 1, **dadurch gekennzeichnet, dass** die Vermessung der Lage der Oberfläche der Zahnflanken der Verzahnung (1) oder des Profils gemäß Schritt a) von Anspruch 1 mit mindestens zwei Sensoren (3, 4, 5) erfolgt, die in Richtung der Drehachse (a) versetzt, aber an derselben Umfangsposition des Werkstücks (2) angeordnet sind.

3. Verfahren nach Anspruch 1, **dadurch gekennzeichnet, dass** die Vermessung der Lage der Oberfläche der Zahnflanken der Verzahnung (1) oder des Profils gemäß Schritt a) von Anspruch 1 mit mindestens zwei Sensoren (3, 4, 5) erfolgt, die in Richtung der Drehachse (a) versetzt und an unterschiedlichen Umfangspositionen (Ul, U2, U3) des Zahnrades (2) angeordnet sind.

4. Verfahren nach Anspruch 1, **dadurch gekennzeichnet, dass** die Vermessung der Lage der Oberfläche der Zahnflanken der Verzahnung (1) oder des Profils gemäß Schritt a) von Anspruch 1 mit einem einzigen Sensor (3) erfolgt, der in Richtung der Drehachse (a) beweglich angeordnet ist.

5. Verfahren nach einem der Ansprüche 2 bis 4, **dadurch gekennzeichnet, dass** als Sensor (3, 4, 5) ein optisch wirkender Sensor verwendet wird.

6. Verfahren nach einem der Ansprüche 2 bis 4, **dadurch gekennzeichnet, dass** als Sensor (3, 4, 5) ein induktiv oder kapazitiv wirkender Sensor verwendet wird.

## Claims

1. Method for grinding the toothing (1) or the profile of a workpiece (2), in particular a gear wheel, wherein the workpiece (2) has an axis of rotation (a) and wherein an allowance (A) is ground away from the surface of the tooth flanks of the toothing (1) or the profile, wherein the method comprises the steps:
a) measuring the position of the surface of the tooth flanks of the toothing (1) or the profile, wherein the measuring is carried out in at least two positions (P1, P2) of the workpiece (2), which are arranged offset in the direction of the axis of rotation (a);
b) determining the actually existing allowance (A) of the workpiece (2) that has not yet been ground, based on the measurement values determined in step a);
c) determining at least one grinding parameter (v) so that the material removal per time has a predetermined value or does not exceed a predefined value during grinding;
d) grinding the workpiece (2) with the grinding parameters (v) established according to step c),
**characterized in that**
the defined grinding parameter (v) according to step c) is the feed rate at which the grinding tool is moved when grinding the toothing (1) or profile, wherein the determination of the feed rate (v) takes place in the form of a course which changes in the direction of the axis of rotation (a) and takes into account the respective locally existing allowance (A).

2. Method according to claim 1, **characterized in that** the measurement of the position of the surface of the tooth flanks of the toothing (1) or of the profile according to step a) of claim 1 is carried out with at least two sensors (3, 4, 5) which are offset in the direction of the axis of rotation (a) but are arranged at the same circumferential position of the workpiece (2).

3. Method according to claim 1, **characterized in that** the measurement of the position of the surface of the tooth flanks of the toothing (1) or of the profile according to step a) of claim 1 is carried out with at least two sensors (3, 4, 5) which are offset in the direction of the axis of rotation (a) and are arranged at different circumferential positions (Ul, U2, U3) of the gear wheel (2).

4. Method according to claim 1, **characterized in that** the measurement of the position of the surface of the tooth flanks of the toothing (1) or of the profile according to step a) of claim 1 is carried out with a single sensor (3) which is arranged movably in the direction of the axis of rotation (a).

5. Method according to one of claims 2 to 4, **characterized in that** an optically acting sensor is used as sensor (3, 4, 5).

6. Method according to one of claims 2 to 4, **characterized in that** an inductively or capacitively acting sensor is used as the sensor (3, 4, 5).

## Revendications

1. Procédé de meulage de la denture (1) ou du profil d'une pièce à travailler (2), en particulier d'une roue dentée, dans lequel la pièce à travailler (2) présente un axe de rotation (a), et dans lequel une surépaisseur (A) est enlevée par meulage de la surface des flancs de dent de la denture (1) ou du profil, le procédé comprenant les étapes consistant à :
a) mesurer la position de la surface des flancs de dent de la denture (1) ou du profil, le mesurage étant effectué en au moins deux positions (P1, P2) de la pièce à travailler (2) qui sont disposées de manière décalée dans la direction de l'axe de rotation (a) ;
b) déterminer la surépaisseur (A) réellement présente de la pièce à travailler (2) pas encore meulée sur la base des valeurs de mesure déterminées à l'étape a) ;
c) établir au moins un paramètre de meulage (v) de sorte que lors du meulage, le volume d'usinage dans un laps de temps adopte une valeur prédéfinie ou ne la dépasse pas ;
d) meuler la pièce à travailler (2) avec les paramètres de meulage (v) établis selon l'étape c),
**caractérisé en ce que** le paramètre de meulage établi (v) selon l'étape c) est la vitesse d'avance à laquelle l'outil de meulage est déplacé lors du meulage de la denture (1) ou du profil, dans lequel l'établissement de la vitesse d'avance (v) est effectué sous la forme d'un tracé qui varie dans la direction de l'axe de rotation (a) et tient compte de la surépaisseur (A) respectivement présente localement.

2. Procédé selon la revendication 1, **caractérisé en ce que** le mesurage de la position de la surface des flancs de dent de la denture (1) ou du profil est effectué selon l'étape a) de la revendication 1 par au moins deux capteurs (3, 4, 5) qui sont disposés de manière décalée dans la direction de l'axe de rotation (a) mais dans la même position périphérique de la pièce à travailler (2).

3. Procédé selon la revendication 1, **caractérisé en ce que** le mesurage de la position de la surface des flancs de dent de la denture (1) ou du profil selon l'étape a) de la revendication 1 est effectué par au moins deux capteurs (3, 4, 5) qui sont disposés de manière décalée dans la direction de l'axe de rotation (a) et en différentes positions périphériques (U1, U2, U3) de la roue dentée (2).

4. Procédé selon la revendication 1, **caractérisé en ce que** le mesurage de la position de la surface des flancs de dent de la denture (1) ou du profil selon l'étape a) de la revendication 1 est effectué par un seul capteur (3) qui est disposé de manière mobile dans la direction de l'axe de rotation (a).

5. Procédé selon l'une quelconque des revendications 2 à 4, **caractérisé en ce qu'**un capteur à effet optique est utilisé en tant que capteur (3, 4, 5).

6. Procédé selon l'une quelconque des revendications 2 à 4, **caractérisé en ce qu'**un capteur à effet inductif ou capacitif est utilisé en tant que capteur (3, 4, 5).
